# EUROPÄISCHE PATENTANMELDUNG

(11) **EP 4 711 204 A1**
(43) Veröffentlichungstag der Anmeldung: **18.03.2026**
(21) Anmeldenummer: 25198430.8
(22) Anmeldetag: 27.08.2025
(51) Int. Cl.: B60Q 3/64, B60Q 3/78, B60Q 3/80, B60Q 3/85, B60Q 3/225

(54) **KRAFTFAHRZEUG, AUFWEISEND BELEUCHTUNGSEINRICHTUNG**

(30) Priorität: 13.09.2024 DE 102024126469
(71) Anmelder: MAN Truck & Bus SE, 80995 München (DE)
(72) Erfinder: Voigt, Sebastian, 80995 München (DE); Röger, Thomas, 80995 München (DE)
(74) Vertreter: v. Bezold & Partner Patentanwälte - PartG mbB

(57) **Zusammenfassung**

Die Erfindung betrifft ein Kraftfahrzeug (100), vorzugsweise Nutzfahrzeug, aufweisend eine Instrumententafel (12), ein Ablagefach, vorzugsweise ein Handschuhfach (14), und eine Beleuchtungseinrichtung (16). Das Ablagefach ist an der Instrumententafel (12) angeordnet. Die Beleuchtungseinrichtung (16) umfasst mindestens eine Lichtleiste (18a-c), vorzugsweise mindestens eine LED-Leiste oder mindestens einen Lichtleiter, wobei die Beleuchtungseinrichtung (16) an der Instrumententafel (12) und zumindest abschnittsweise oberhalb des Ablagefachs angeordnet ist.

## Beschreibung

Die Erfindung betrifft ein Kraftfahrzeug.

Zum Hervorheben von Konturen von Interieurkomponenten und/oder zum Erzeugen einer Lichtstimmung in einem Fahrzeuginnenraum sind Systeme bekannt, die zusätzlich zu einem zentralen Oberlicht vorgesehen sind und Licht in den Fahrzeuginnenraum abgeben.

Bekannte Systeme weisen allerdings den Nachteil auf, dass ein vergleichsweise großer Bereich beleuchtet wird, was, insbesondere bei Nachtfahrten und/oder bei Tunnelfahrten, dazu führen kann, dass einem Fahrer des Kraftfahrzeugs Streulicht störend ins Auge fällt.

Dadurch kann es zur Ablenkung des Fahrers kommen, was die Fahrsicherheit beeinträchtigen kann.

Eine Aufgabe ist es daher, eine verbesserte Technik zum Beleuchten von Interieurkomponenten und/oder Hervorheben von Konturen eines Fahrzeuginnenraums bereitzustellen, mit dem Nachteile bekannter Systeme vermieden werden. Eine Aufgabe ist es dabei insbesondere, eine hinsichtlich des emittierten Streulichts verbesserte Technik bereitzustellen.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten Aspekt wird ein Kraftfahrzeug bereitgestellt.

Das Kraftfahrzeug weist eine Instrumententafel, ein Ablagefach (z. B. ein Handschuhfach) und eine Beleuchtungseinrichtung auf. Das Ablagefach ist an der Instrumententafel angeordnet und/oder durch die Instrumententafel umfasst. Die Beleuchtungseinrichtung umfasst mindestens eine Lichtleiste (z. B. mindestens eine LED-Leiste oder mindestens einen Lichtleiter). Die Beleuchtungseinrichtung ist an der Instrumententafel und zumindest abschnittsweise oberhalb des Ablagefach angeordnet.

Ein Vorteil kann darin liegen, dass eine Außenkontur eines Bereichs oberhalb des Ablagefach (z. B. des Handschuhfachs und/oder Handschuhkastens) hervorhebbar ist. Einem Fahrer und/oder Beifahrer des Kraftfahrzeugs kann somit insbesondere bei dunklen Lichtverhältnissen z. B. eine Öffnung, ein Schließen und eine Entnahme von Objekten aus dem Ablagefach (z. B. Handschuhfach) sowie die Orientierung im Kraftfahrzeug allgemein erleichtert werden. Dadurch kann eine Ablenkung des Fahrers reduzierbar und die Fahrsicherheit erhöhbar sein.

Darüber hinaus kann mittels der Beleuchtungseinrichtung ein situationsadäquates Lichtambiente erzeugt werden, z. B. eine Fokus-Lichtstimmung zum Vermeiden oder Mindern von Müdigkeit bei Nachtfahrten oder eine Entspannungs-Lichtstimmung während Ruhezeiten.

Im Allgemeinen sollen sich die Ausdrücke "oberhalb", "unterhalb", "unten" und "oben" bevorzugt auf die Fahrzeughochachse bzw. Fahrzeughochrichtung beziehen.

Unter dem Begriff "unterhalb" kann also eine in Schwerkraftrichtung tiefer angeordnete Komponente bezeichnen oder eine entgegen der Fahrzeughochrichtung angeordnete Komponente. Der Begriff "oberhalb" kann also eine in Schwerkraftrichtung höher angeordnete Komponente oder in der Fahrzeughochrichtung darüber angeordnete Komponente bezeichnen.Analog dazu sollen sich die Ausdrücke "hinter", "vor" bevorzugt auf die Fahrzeuglängsachse bzw. Fahrzeuglängsrichtung beziehen.

Das Kraftfahrzeug ist bevorzugt ein Nutzfahrzeug. In diesem Fall kann es sich mit anderen Worten um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Fahrzeug um einen Lastkraftwagen, einen Omnibus und oder einen Sattelzug handeln, der zumindest teilweise elektrisch angetrieben ist.

Die Beleuchtungseinrichtung kann zum Hervorheben einer Außenkontur der Instrumententafel und/oder zum Beleuchten einer Komponente der Instrumententafel und/oder zur indirekten Beleuchtung eines Fahrzeuginnenraums ausgebildet sein.

Die Instrumententafel kann z. B. die zum Betreiben des Kraftfahrzeugs ausgebildeten Steuerkomponenten (z. B. ein Kombiinstrument, eine Lenksäule, Fahrzeuganzeigen, Displays, Lüftungs-Öffnungen, eine Mittelkonsole, eine Dashboard-Leiste etc.) umfassen oder aufnehmen. Die Instrumententafel kann sich z. B. in einer Kraftfahrzeug-Querrichtung von einer fahrerseitigen Fahrzeugtür (Fahrertür) bis zu einer beifahrerseitigen Fahrzeugtür (Beifahrertür) erstrecken. Beispielsweise kann die Instrumententafel ein Armaturenbrett sein.

Die Beleuchtungseinrichtung kann eine Ambiente-Beleuchtungseinrichtung sein.

Das Ablagefach (z. B. das Handschuhfach) kann z. B. unterhalb einer Dashboard-Leiste der Instrumententafel angeordnet sein.

Die Lichtleiste kann z. B. eine RGB-Lichtleiste sein, also z. B. rote, grüne und blaue Leuchtelemente aufweisen, die verschiedene Leuchtfarben (z. B. gelb, violett und/oder weiß) durch das additive Mischen der drei Grundfarben (Rot, Grün und Blau) bildet.

Ferner kann die zumindest eine Ambiente-Beleuchtungseinrichtung ausgebildet sein, in verschiedenen Leuchtfarben zu leuchten (z. B. in mindestens drei verschiedenen Leuchtfarben oder in mindestens fünf verschiedenen Leuchtfarben) und/oder ihre Leuchtfarbe zu wechseln.

Gemäß einem Ausführungsbeispiel kann die Beleuchtungseinrichtung mindestens eine Lichtaustrittsfläche aufweisen, die ausgebildet ist, von der mindestens einen Lichtleiste durch die mindestens einen Lichtaustrittsfläche tretendes Licht diffus (z. B. in mehrere unterschiedliche Raumrichtungen) zu streuen.

Bevorzugt ist die mindestens eine Lichtleiste hinter der mindestens einen Lichtaustrittsfläche angeordnet.

Dadurch kann das in den Fahrzeuginnenraum emittierte Streulicht weiter reduzierbar sein.

Gemäß einem Ausführungsbeispiel kann die mindestens eine Lichtaustrittsfläche zum Streuen des durch die Lichtaustrittsfläche tretenden Lichts eine Vorsatzoptik umfassen.

Dadurch kann eine besonders gleichmäßig Streuung des seitens der Lichtleiste emittierten Lichts erreichbar sein.

Gemäß einem Ausführungsbeispiel kann die mindestens eine Lichtaustrittsfläche zum Streuen des durch die Lichtaustrittsfläche hindurch tretenden Lichts ein das durchtretende Licht diffus streuendes Material (z. B. ein LD12-Material) umfassen.

Bevorzugt ist die mindestens eine Lichtleiste mindestens ein Lichtleiter und die Lichtaustrittsfläche eine Mantelfläche des mindestens einen Lichtleiters.

Dies kann voreilhaft eine Reduzierung des technischen Aufwands nach sich ziehen.

Gemäß einem Ausführungsbeispiel kann die Beleuchtungseinrichtung ein Trägerelement umfassen, in das die mindestens eine Lichtleiste integriert ist.

Es ist denkbar, dass an dem Trägerelement und/oder der Instrumententafel Anschläge zur Positionierung des Trägerelements an der Instrumententafel vorgesehen sind.

Zur Befestigung der mindestens einen Lichtleiste an dem Trägerelement kann z. B. Klebstoff verwendet werden.

Ein oder mehrere Kabel zum Zuführen von elektrischer Energie zu der Lichtleiste und/oder zum Steuern der Lichtleiste können innerhalb des Trägerelements verlaufen. Die Beleuchtungseinrichtung und/oder die Lichtleiste kann elektrisch mit einer Ambientebeleuchtung des Kraftfahrzeugs gekoppelt sein.

Dadurch kann die Beleuchtungseinrichtung z. B. nachrüstbar gestaltet sein.

Gemäß einem Ausführungsbeispiel kann an die Instrumententafel angebracht (z. B. verklebt und/oder verschraubt und/oder geclipst und/oder geschweißt) sein. Das Trägerelement kann z. B. lösbar oder nicht zerstörungsfrei lösbar an die Instrumententafel angebracht sein.

Bevorzugt ist das Trägerelement mittels mehrerer der exemplarisch genannten Befestigungsarten an die Instrumententafel angebracht.

Gemäß einem Ausführungsbeispiel kann eine (z. B. gesamte) einem Fahrzeuginnenraum zugewandte Außenoberfläche der Beleuchtungseinrichtung bündig und/oder stufenfrei mit einer Instrumententafel-Außenoberfläche (z. B. mit einer Außenfläche einer Dashboard-Leiste der Instrumententafel) abschließen.

Dadurch können z. B. für eine Crash-Sicherheit notwendige Kopf-Aufprallradien an der Instrumententafel eingehalten werden (beispielsweise, indem Radien unterhalb einer vorbestimmten Grenzwerts vermieden werden).

Gemäß einem Ausführungsbeispiel kann die mindestens eine Lichtleiste mehrere (z. B. drei) hintereinander entlang einer Linie hintereinander angeordnete Lichtleisten umfassen.

Gemäß einem Ausführungsbeispiel kann die mindestens eine Lichtleiste sich von einem türseitigen Endbereich der Instrumententafel bis in einen mittelkonsolenseitigen Zentralbereich der Instrumententafel erstrecken.

Dadurch kann ein zur Orientierung im Fahrzeuginnenraum besonders wichtiger Abschnitt der Instrumententafel hervorhebbar sein.

Gemäß einem Ausführungsbeispiel kann die mindestens eine Lichtleiste eine Gesamtlänge aufweisen, die mindestens 30%, mindestens 40%, mindestens 50%, mindestens 60%, mindestens 70%, mindestens 80% oder mindestens 90% eines beifahrerseitigen Abschnitts der Instrumententafel entspricht.

Mit anderen Worten ist denkbar, dass sich die mindestens eine Lichtleiste über zumindest einen Großteil des beifahrerseitigen Abschnitts der Instrumententafel erstreckt.

Wenn die mindestens eine Lichtleiste mehrere Lichtleisten umfasst, ist denkbar, dass die Gesamtlänge durch die Gesamtlänge aller hintereinander angeordneten Lichtleisten definiert ist.

Gemäß einem Ausführungsbeispiel kann die Instrumententafel eine Dashboard-Leiste aufweisen und die Beleuchtungseinrichtung in die Dashboard-Leiste integriert sein. Bevorzugt ist die Beleuchtungseinrichtung und/oder die mindestens eine Lichtleiste und/oder die mindestens eine Lichtaustrittsfläche in Nuten der Dashboard-Leiste aufgenommen und/oder versenkt und/oder eingelassen.

Die Dashboard-Leiste kann bevorzugt als eine Prallfläche der Instrumententafel für Fahrzeuginsassen im Crash-Fall ausgebildet sein. Beispielsweise ist denkbar, dass die Dashboard-Leiste durch vergleichsweise große Außenradien und/oder Außenradien oberhalb eines Radien-Grenzwerts und/oder keine oder wenige Erhebungen charakterisiert ist.

Die Dashboard-Leiste kann z. B. eine Fläche zur Minimierung eines Verletzungsrisikos im Falle eines Aufpralls eines Fahrzeuginsassen auf die Instrumententafel sein.

Die Dashboard-Leiste kann aber z. B. auch eine Zierleiste sein.

Dadurch kann ein Überstehen der Beleuchtungseinrichtung von der Instrumententafel und/oder von der Dashboard-Leiste wie hierin offenbart vermieden oder reduziert werden, was z. B. die Crashsicherheit weiter erhöhen kann.

Gemäß einem Ausführungsbeispiel kann sich die mindestens eine Lichtleiste entlang einer Haupterstreckungsrichtung der Dashboard-Leiste und/oder entlang einer Unterkante der Dashboard-Leiste erstrecken.

Die Haupterstreckungsrichtung der Dashboard-Leiste kann quer zu einer Kraftfahrzeuglängsrichtung verlaufen. Die Haupterstreckungsrichtung der Dashboard-Leiste kann die Raumrichtung angeben, entlang der die Dashboard-Leiste ihre größte räumliche Ausdehnung aufweist.

Gemäß einem Ausführungsbeispiel kann die Beleuchtungseinrichtung nicht von einer einem Fahrzeuginnenraum zugewandten Instrumententafel-Außenoberfläche abkragen und/oder abstehen.

Gemäß einem Ausführungsbeispiel kann die mindestens eine Lichtleiste hinter der mindestens einen Lichtaustrittsfläche angeordnet sein.

Alternativ oder zusätzlich kann die mindestens eine Lichtleiste an einem beifahrerseitigen Abschnitt der Instrumententafel angeordnet sein.

Alternativ oder zusätzlich kann die mindestens eine Lichtleiste abschnittsweise oberhalb des Ablagefachs (z. B. des Handschuhfachs) und zusätzlich abschnittsweise oberhalb eines (z. B. offenen) Ablagefachs der Instrumententafel angeordnet sein. Die mindestens eine Lichtleiste kann zum Ausleuchten des Ablagefachs ausgebildet sein.

Alternativ oder zusätzlich kann die mindestens eine Lichtaustrittsfläche als Diffusor wirken.

Alternativ oder zusätzlich kann die Instrumententafel (z. B. die Dashboard-Leiste) eine strukturierte Oberfläche aufweisen, um das von der Beleuchtungseinrichtung ausgestrahlte Licht diffus zu brechen.

Alternativ oder zusätzlich kann die Beleuchtungseinrichtung in die Instrumententafel integriert (z. B. in Nuten der Instrumententafel aufgenommen) sein.

Gemäß einem Ausführungsbeispiel kann das Kraftfahrzeug eine Bedieneinrichtung und eine Steuereinrichtung umfassen.

Mittels der Bedieneinrichtung kann eine Nutzereingabe erfassbar sein.

Die Steuereinrichtung kann eingerichtet sein, in Abhängigkeit der auf der Bedieneinrichtung erfassten Nutzereingabe mehrere Beleuchtungseinstellungen der Beleuchtungseinrichtung (z. B. eine Helligkeit und/oder eine Leuchtfarbe und/oder eine Leuchtstärke eines von der Beleuchtungseinrichtung emittierten Lichts) einzustellen.

Es ist denkbar, dass die mehreren Beleuchtungseinstellungen in mehreren Stufen einstellbar sind, z. B. mit stufenweise zunehmender Helligkeit, stufenweise zunehmender Lichtintensität und/oder mit verschiedenen Lichtfarben.

Lediglich exemplarisch ist denkbar, dass ein Nutzer mittels der Bedieneinrichtung nur eine begrenzte Anzahl an Beleuchtungseinstellungen (z. B. Lichtvarianten) durchtoggelt (z. B. im Sinne eines begrenzten Funktionsumfangs).

Beispielsweise kann die Leuchtfarbe die Farben Blau, Grün, Rot, Gelb, Orange, Violett oder jeden andere Farbe oder Farbmischung umfassen.

Dadurch kann der Nutzer die Beleuchtung bedarfs- und situationsgerecht einstellen, was die Fahrsicherheit weiter erhöhen kann.

Gemäß einem Ausführungsbeispiel kann die Steuereinrichtung ausgebildet sein, die Beleuchtungseinrichtung in Abhängigkeit eines Betriebszustands des Kraftfahrzeugs (z. B. automatisch) wahlweise in einem Normalbeleuchtungsmodus und einem Dimmbeleuchtungsmodus zu betreiben, wobei in dem Normalbeleuchtungsmodus alle der mehreren Beleuchtungseinstellungen einstellbar sind und in dem Dimmbeleuchtungsmodus nur eine Teilmenge der mehreren Beleuchtungseinstellungen einstellbar ist.

Die Teilmenge der mehreren Beleuchtungseinstellungen kann z. B. nur aus einem Teil der Leuchtfarben bestehen.

Denkbar ist z. B. auch, dass in dem Normalbeleuchtungsmodus alle der mehreren Stufen der jeweiligen Beleuchtungseinstellung einstellbar sind und/oder in dem Dimmbeleuchtungsmodus nur eine Teilmenge der mehreren Stufen einstellbar ist.

Denkbar ist auch, dass die Teilmenge aus nur einem Teil der im Normalbeleuchtungsmodus verfügbaren Helligkeitsstufen und/oder Leuchtstärke-Stufen besteht. Bevorzugt ist, dass im Dimmbeleuchtungsmodus nur die unteren und/oder untersten der jeweiligen Stufen einstellbar sind.

Dadurch kann ein Einstellen von für bestimmte Betriebszustände des Kraftfahrzeugs nicht geeigneten Beleuchtungseinstellungen verhindert werden. Die Fahrsicherheit kann dadurch weiter erhöhbar sein.

Gemäß einem Ausführungsbeispiel kann die Steuereinrichtung ausgebildet sein, bei Vorliegen eines Parkzustands des Kraftfahrzeugs, die Beleuchtungseinrichtung in dem Normalbeleuchtungsmodus zu betreiben und/oder bei Vorliegen eines Fahrbetriebsmodus, die Beleuchtungseinrichtung in dem Dimmbeleuchtungsmodus zu betreiben.

Beispielsweise ist die Steuereinrichtung ausgebildet, einen Schaltzustand (z. B. ein Schaltzustandssignal) einer Zündung und/oder einer Parkbremse des Kraftfahrzeugs zu erfassen oder zu empfangen. Der Parkzustand wird bevorzugt durch eine deaktivierte Zündung und/oder eine eingelegte Parkbremse definiert. Der Fahrbetriebsmodus wird bevorzugt durch eine aktivierte Zündung und/oder eine gelöste Parkbremse definiert.

Dadurch kann z. B. garantiert werden, dass die oberen Helligkeitsstufen nur in sicheren Situationen einstellbar sind. Die Fahrsicherheit kann dadurch weiter erhöhbar sein.

Gemäß einem Ausführungsbeispiel kann die Bedieneinrichtung (z. B. ausschließlich) folgende Bedienelemente (z. B. Taster) zur Einstellung der Teilmenge der mehreren Beleuchtungseinstellungen aufweisen: ein An/Aus-Bedienelement, ein Farbwahl-Bedienelement und/oder ein Helligkeits-Bedienelement.

Mittels des An/Aus-Bedienelements kann eine Beleuchtungseinrichtung einschaltbar und ausschaltbar sein.

Mittels des Farbwahl-Bedienelements kann eine Leuchtfarbe der Beleuchtungseinrichtung einstellbar sein.

Mittels des Helligkeits-Bedienelements kann eine Leuchtstärke der Beleuchtungseinrichtung einstellbar sein.

Mittels eines einmaligen Drückens z. B. des Helligkeits-Bedientasters kann z. B. eine Helligkeit 0 einstellbar sein. Mittels eines anschließenden Gedrückt-Haltens des Helligkeits-Bedientasters kann die Helligkeit schrittweise hochgefahren werden bis man die gewünschte Helligkeit erreicht ist.

Vorteilhaft kann sich eine einfach zu bedienende Einstellmöglichkeit für den Fahrer ergeben, welche z. B. in schwierigen Fahrsituationen einen schnellen Wechsel von Beleuchtungseinstellungen ermöglicht. Daher kann die Aufmerksamkeit des Fahrers möglichst wenig in Anspruch genommen werden, was die Fahrsicherheit weiter erhöhen kann.

Die zuvor beschriebenen bevorzugten Ausführungsformen und Merkmale der Erfindung sind beliebig miteinander kombinierbar. Einzelheiten und Vorteile der Erfindung werden im Folgenden unter Bezug auf die beigefügte Zeichnung beschrieben. Es zeigen:
- Figur 1: eine schematische Darstellung eines Abschnitts einer Instrumententafel eines Kraftfahrzeugs gemäß einem Ausführungsbeispiel;
- Figur 2: eine perspektivische Ansicht des Abschnitts aus Figur 1;
- Figur 3: eine schematische Darstellung einer Dashboard-Leiste eines Kraftfahrzeugs gemäß einem Ausführungsbeispiel (Vorderansicht);
- Figur 4: eine schematische Darstellung der Dashboard-Leiste aus Figur 3 (Hinteransicht);
- Figur 5: eine schematische Darstellung einer Dashboard-Leiste eines Kraftfahrzeugs gemäß einem Ausführungsbeispiel (Vorderansicht);
- Figur 6: eine schematische Darstellung der Dashboard-Leiste aus Figur 5 (Hinteransicht);
- Figuren 7A-C: schematische Ansichten einer Dashboard-Leiste eines Kraftfahrzeugs gemäß einem Ausführungsbeispiel, einer Lichtleiste und eines Trägerelements;
- Figur 8: eine schematische Darstellung einer Dashboard-Leiste eines Kraftfahrzeugs gemäß einem Ausführungsbeispiel (Vorderansicht);
- Figur 9: ein Kraftfahrzeug gemäß einem Ausführungsbeispiel (Vorderansicht);
- Figur 10: ein Kraftfahrzeug gemäß einem Ausführungsbeispiel; und
- Figur 11: eine Bedieneinrichtung eines Kraftfahrzeugs gemäß dem Ausführungsbeispiel aus Figur 9.

Die in den Figuren gezeigten Ausführungsbeispiele stimmen zumindest teilweise überein, so dass ähnliche oder identische Teile mit den gleichen Bezugszeichen versehen sind und zu deren Erläuterung auch auf die Beschreibung der anderen Figuren verwiesen wird, um Wiederholungen zu vermeiden.

Teilweise sind in den Figuren eine Kraftfahrzeug-Längsrichtung X, eine Kraftfahrzeug-Querrichtung Y, eine Kraftfahrzeug-Hochrichtung H sowie eine Haupterstreckungsrichtung R angegeben. Die Haupterstreckungsrichtung R kann im Wesentlichen parallel zur Kraftfahrzeug-Querrichtung Y orientiert sein. Bevorzugt handelt es sich bei der Kraftfahrzeug-Längsrichtung X, eine Kraftfahrzeug-Querrichtung Y, eine Kraftfahrzeug-Hochrichtung H um kartesische Koordinatenachsen.

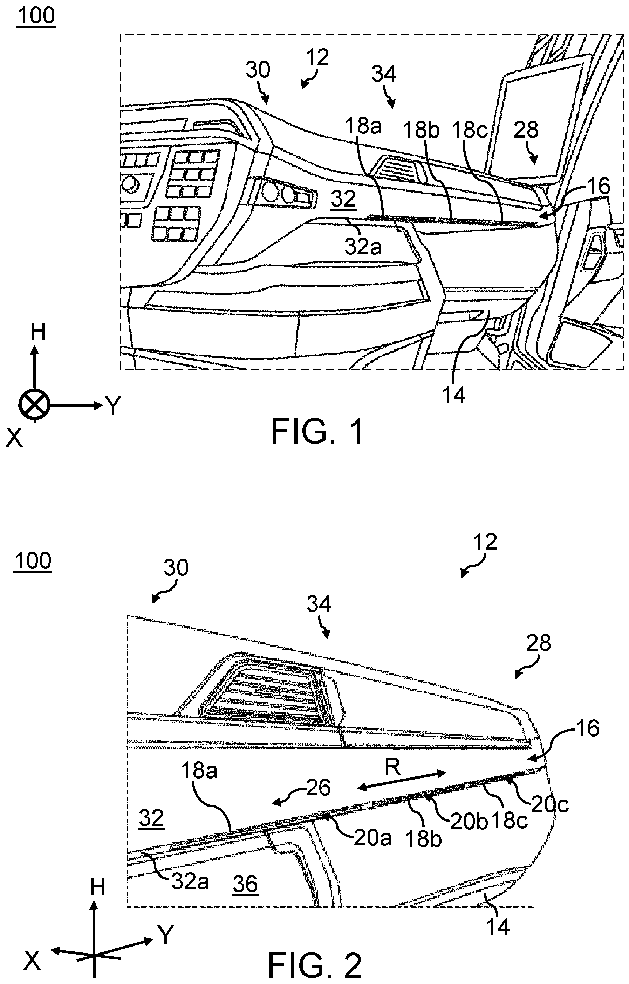

Figur 1 zeigt eine schematische Darstellung eines Kraftfahrzeugs 100 (Blick vom Fahrersitz aus in Fahrtrichtung nach vorne).

Das Kraftfahrzeug 100 weist eine Instrumententafel 12 auf, an der ein Ablagefach, nämlich ein Handschuhfach 14 angeordnet ist. Es ist auch denkbar, dass das Handschuhfach 14 Teil der Instrumententafel 12 ist.

Im gezeigten Ausführungsbeispiel ist die Instrumententafel 12 ein Armaturenbrett eines Nutzfahrzeugs. Die Instrumententafel 12 weist ferner eine Dashboard-Leiste 32 auf, unterhalb der das Handschuhfach 14 angeordnet ist. Mit anderen Worten kann das Handschuhfach 14 in Kraftfahrzeug-Hochrichtung H gegenüber der Dashboard-Leiste 32 nach unten versetzt sein.

Zum Hervorheben einer Außenkontur der Instrumententafel 12 und zum Beleuchten einer Komponente der Instrumententafel 12 weist das Kraftfahrzeug 100 ferner eine Beleuchtungseinrichtung 16 auf. Die Beleuchtungseinrichtung 16 umfasst mindestens eine Lichtleiste 18a-c (z. B. mindestens eine LED-Leiste oder mindestens einen Lichtleiter). Die Beleuchtungseinrichtung 16 ist an der Instrumententafel 12 und zumindest abschnittsweise oberhalb des Handschuhfachs 14 angeordnet.

Die Beleuchtungseinrichtung 16 ist ausgebildet, die Unterkante der Dashboard-Leiste 32 hervorzuheben, um die Orientierung von Fahrzeuginsassen, z. B. bei dunklen Lichtverhältnissen zu erleichtern.

Darüber hinaus kann mittels der Beleuchtungseinrichtung 16 ein situationsadäquates Lichtambiente geschaffen werden, z. B. eine Fokus-Lichtstimmung zum Vermeiden oder Mindern von Müdigkeit bei Nachtfahrten oder eine Entspannungs-Lichtstimmung während Ruhezeiten.

Die Dashboard-Leiste 32 ist hier als eine Prallfläche der Instrumententafel 12 für Fahrzeuginsassen im Crash-Fall ausgebildet. Die Dashboard-Leiste 32 wirkt also als eine Fläche zur Minimierung eines Verletzungsrisikos im Falle eines Aufpralls eines Fahrzeuginsassen auf die Instrumententafel 12. Dazu ist denkbar, dass die Dashboard-Leiste 32 durch vergleichsweise große Außenradien und/oder keine oder wenig Erhebungen charakterisiert ist.

Es ist aber auch denkbar, dass die Dashboard-Leiste 32 eine Ablagefläche der Instrumententafel 12 bildet.

Die mindestens eine Lichtleiste 18a-c weist im gezeigten Ausführungsbeispiel drei entlang einer Linie hintereinander angeordnete Lichtleisten 18a-c auf.

Die drei Lichtleisten 18a-c erstrecken sich von einem türseitigen Endbereich 28 der Instrumententafel 12 bis in einen mittelkonsolenseitigen Zentralbereich 30 der Instrumententafel 12.

Die drei hintereinander angeordneten Lichtleisten 18a-c weisen zusammen eine Gesamtlänge auf, die hier mindestens 70% eines beifahrerseitigen Abschnitts 34 der Instrumententafel 12 entspricht.

Mit anderen Worten erstreckt sich die Gesamtlänge der drei Lichtleisten 18a-c über zumindest einen Großteil des beifahrerseitigen Abschnitts 34 der Instrumententafel 12.

Der beifahrerseitige Abschnitt 34 wird hier - lediglich exemplarisch - durch die Dashboard-Leiste 32 ausgebildet.

Wie in Figur 2 ersichtlich ist, erstrecken sich die drei Lichtleisten 18a-c nicht nur oberhalb des Handschuhfachs 14, sondern abschnittsweise auch oberhalb eines (z. B. offenen) Ablagefachs 36 der Instrumententafel 12.

Die Beleuchtungseinrichtung 16 weist mindestens eine Lichtaustrittsfläche 20a-c, im gezeigten Ausführungsbeispiel drei Lichtaustrittsflächen 20a-c, auf (siehe Figur 2).

Die drei Lichtleisten 18a-c sind hinter jeweils einer der drei Lichtaustrittsflächen 20a-c angeordnet.

Die jeweilige Lichtaustrittsfläche 20a-c ist ausgebildet, von der jeweiligen Lichtleiste 18a-c durch die Lichtaustrittsfläche 20a-c tretendes Licht diffus zu streuen.

Beispielsweise kann die mindestens eine Lichtaustrittsfläche 20a-c zum Streuen des durch die Lichtaustrittsfläche 20a-c tretenden Lichts eine Vorsatzoptik umfassen.

Darüber hinaus ist denkbar, dass kann die jeweilige Lichtaustrittsfläche 20a-c zum Streuen des durch die Lichtaustrittsfläche 20a-c tretenden Lichts ein zweckmäßig geeignetes, das durchtretende Licht diffus streuendes Material (z. B. ein LD12-Material) umfasst oder aus diesem besteht.

Figur 2 zeigt eine perspektivische Ansicht des Kraftfahrzeugs 100 aus Figur 2.

Um die für die Orientierung des Fahrzeuginsassen besonders wichtige Unterkante 32a der Dashboard-Leiste 32 hervorzuheben, erstrecken sich die drei Lichtleisten 18a-c entlang einer Haupterstreckungsrichtung R der Dashboard-Leiste 32 und entlang der Unterkante 32a.

Um die erforderlichen Kopfaufprallradien einzuhalten und die Crash-Sicherheit zu erhöhen, schließt eine (z. B. gesamte) einem Fahrzeuginnenraum zugewandte Außenoberfläche der Beleuchtungseinrichtung 16 bündig und stufenfrei mit einer Instrumententafel-Außenoberfläche 26 (z. B. mit einer Außenfläche einer Dashboard-Leiste 32 der Instrumententafel 12) ab.

Dazu kann die Beleuchtungseinrichtung 16 in die Dashboard-Leiste 32 integriert sein. Die Beleuchtungseinrichtung 16 steht also nicht über der Instrumententafel-Außenoberfläche 26 hinaus ab. Die Beleuchtungseinrichtung 16 ragt mit anderen Worten nicht von der Instrumententafel-Außenoberfläche 26 ab

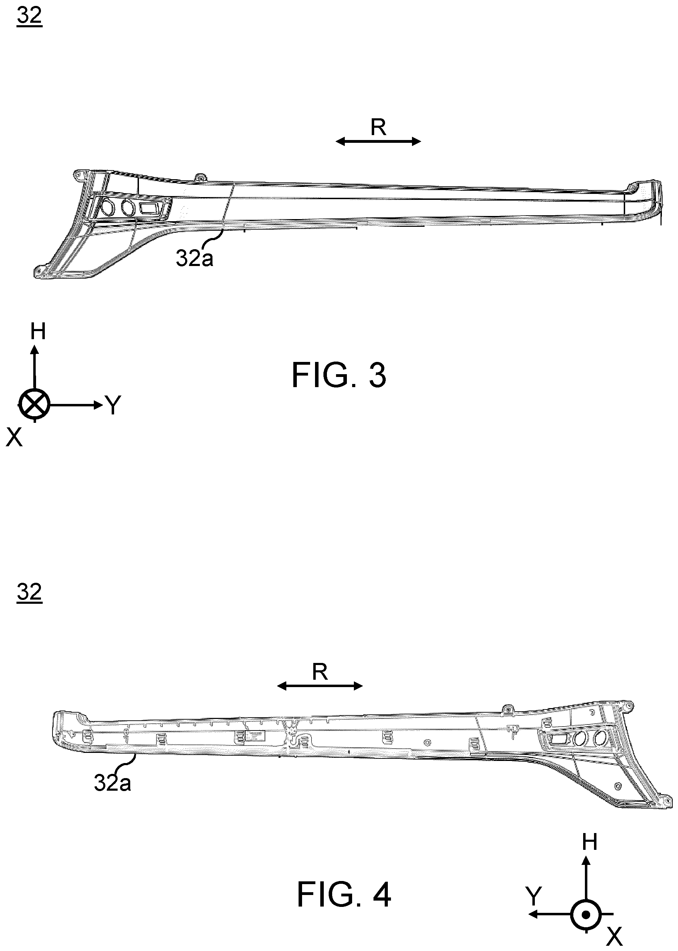

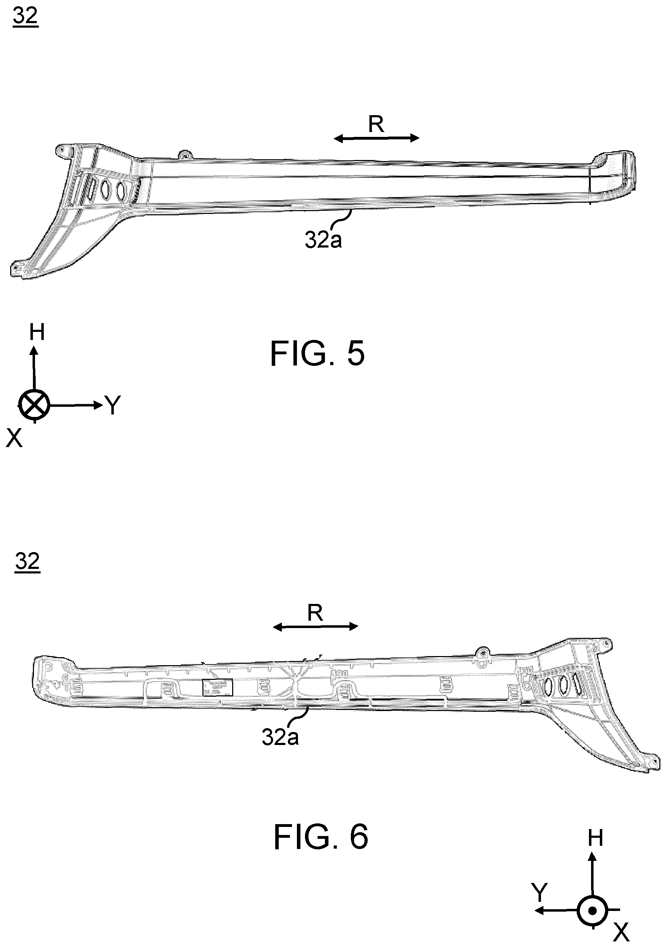

Die Figuren 3 und 4 zeigen zwei Ansichten (Figur 3: Vorderansicht; Figur 4: Hinteransicht) einer Dashboard-Leiste 32 gemäß einem Ausführungsbeispiel. Die Figuren 5 und 6 zeigen zwei Ansichten (Figur 5: Vorderansicht; Figur 6: Hinteransicht) einer Dashboard-Leiste 32 gemäß einem Ausführungsbeispiel.

Der Unterschied des Ausführungsbeispiels der Figuren 5 und 6 gegenüber dem Ausführungsbeispiel der Figuren 3 und 4 liegt im Wesentlichen in der Länge der Dashboard-Leiste 32.

Die Dashboard-Leiste 32 der Figuren 5 und 6 eignet sich besonders für schmalere Kraftfahrzeuge, z. B. schmalere Fahrerhäuser, während sich die Dashboard-Leiste 32 der Figuren 5 und 6 besonders für breitere Kraftfahrzeuge, z. B. breitere Fahrerhäuser, eignet.

Wie in den Figuren 4 bzw. 6 ersichtlich ist, können auf der Rückseite der jeweils gezeigten Dashboard-Leiste 32 Energieversorgungsleitungen zum Zuführen elektrischer Energie und/oder zum Steuern für die jeweilige Lichtleiste 18a-c vorgesehen sein.

Die Lichtleiste kann - lediglich beispielhaft - eine LED-Leiste (RGB-Leiste) mit einer Betriebsspannung von 24V sein.

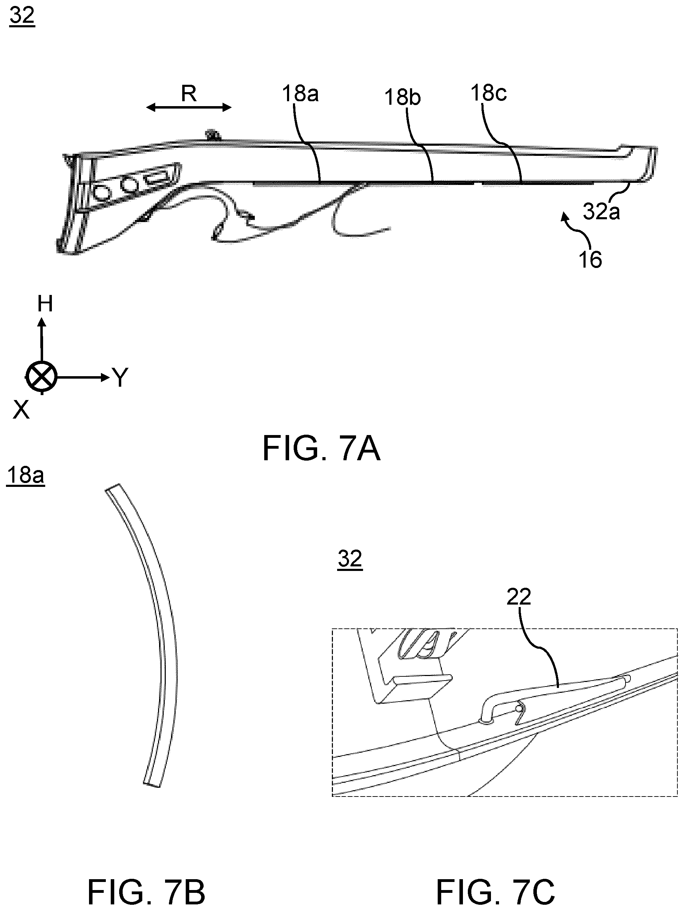

Die Figuren 7A-C zeigen verschiedene Komponenten eines Kraftfahrzeugs 100 (nicht dargestellt) gemäß einem Ausführungsbeispiel in verschiedenen Ansichten.

Figur 7A zeigt eine Dashboard-Leiste im demontierten Zustand. Figur 7B zeigt eine Lichtleiste 20. Figur 7C zeigt eine Detailansicht einer Dashboard-Leiste 32 mit einem Trägerelement 22.

Wie aus Figur 7C hervorgeht weist die Beleuchtungseinrichtung 16 das Trägerelement 22 auf, in das die Lichtleiste 18a-c oder die mehreren Leichtleisten 18a-c integriert ist.

Das Trägerelement 22 kann an einer Hinterseite der Instrumententafel 12 angebracht (z. B. verklebt und/oder verschraubt und/oder geclipst und/oder geschweißt) sein, wobei bevorzugt ist, dass das Trägerelement 22 mittels mehrerer der exemplarisch genannten Befestigungsarten an die Instrumententafel 12 angebracht ist. Das Trägerelement 22 kann z. B. lösbar oder nicht zerstörungsfrei lösbar an die Instrumententafel 12 angebracht sein.

Die in Figur 7B dargestellte Lichtleiste 18a ist hier - lediglich exemplarisch - als Lichtleiter ausgebildet. Die Lichtaustrittsfläche 20a-c wird hier durch eine Mantelfläche des Lichtleiters gebildet. Zum Streuen des durch die Lichtaustrittsfläche 20a-c tretenden Lichts weist der Lichtleiter ein das durchtretende Licht diffus streuendes Material (z. B. ein LD12-Material) auf.

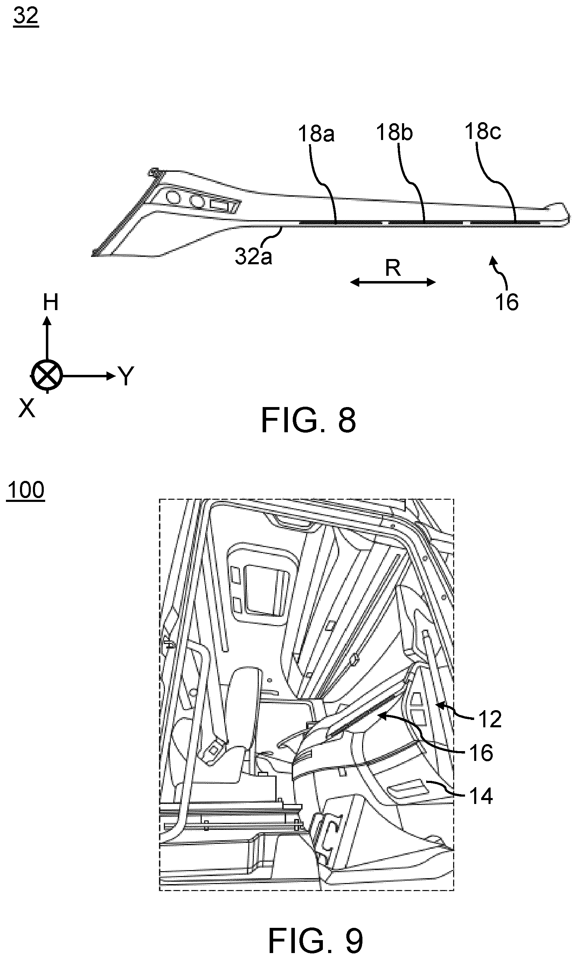

Die Figuren 8 und 9 zeigen ergänzende Ansichten einer Dashboard-Leiste 32 im demontierten Zustand (Figur 8) und montierten Zustand im Kraftfahrzeug 100 (Figur 9).

Die Dashboard-Leiste 32 kann eine strukturierte Oberfläche aufweisen, um das von der Beleuchtungseinrichtung ausgestrahlte Licht diffus zu brechen.

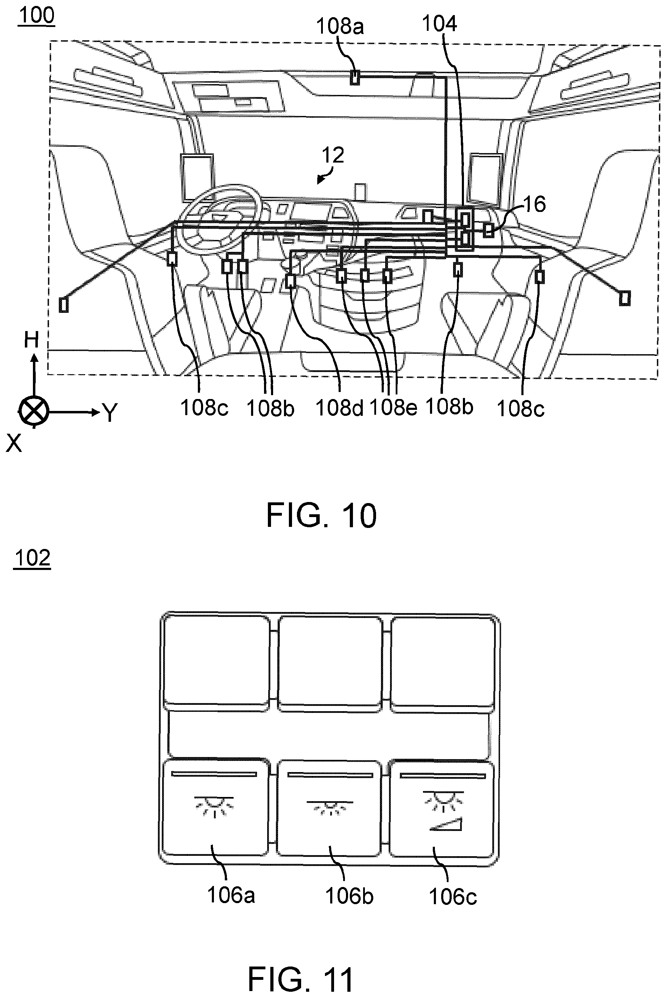

Die Figur 10 zeigt ein Kraftfahrzeug 100 gemäß einem Ausführungsbeispiel.

Um die Beleuchtung bedarfsgerecht einstellen zu können, weist das Kraftfahrzeug 100 eine Bedieneinrichtung 102 eine Steuereinrichtung 104 auf.

Mittels der Bedieneinrichtung 102 kann eine Nutzereingabe erfassbar sein. Die Steuereinrichtung 104 ist ausgebildet, in Abhängigkeit der auf der Bedieneinrichtung 102 erfassten Nutzereingabe mehrere Beleuchtungseinstellungen der Beleuchtungseinrichtung 16 (z. B. eine Helligkeit und/oder eine Leuchtfarbe und/oder eine Leuchtstärke des von der Beleuchtungseinrichtung 16 emittierten Lichts) einzustellen.

Es ist denkbar, dass die mehreren Beleuchtungseinstellungen in mehreren Stufen einstellbar sind, z. B. durch eine stufenweise zunehmende Helligkeit, durch eine stufenweise zunehmende Lichtintensität und/oder durch verschiedene Lichtfarben.

Beispielsweise kann die Leuchtfarbe die Farben Blau, Grün, Rot, Gelb, Orange, Violett und weitere Farben und/oder Farbmischungen umfassen.

Lediglich beispielhaft können neben der Beleuchtungseinrichtung 16 eine oder mehrere weitere Beleuchtungseinrichtungen 108a-e vorgesehen sein, z. B. eine Dachhimmel- 108a, Fußraum- 108b, Seitentür- 108c, Zigarettenanzünder- 108d und/oder Getränkehalterbeleuchtungseinrichtung 108e aufweisen, welche analog zur Beleuchtungseinrichtung mittels der Steuereinrichtung ansteuerbar sind.

Die Figur 11 zeigt eine schematische Darstellung der Bedieneinrichtung 102.

Die Bedieneinrichtung 102 weist, hier exemplarisch, ausschließlich folgende Bedienelemente 106a-c zur Einstellung der Teilmenge der mehreren Beleuchtungseinstellungen auf: ein An/Aus-Bedienelement 106a, ein Farbwahl-Bedienelement 106b und ein Helligkeits-Bedienelement 106c. Mittels des An/Aus-Bedienelements 106a ist die eine Beleuchtungseinrichtung 16 einschaltbar und ausschaltbar. Mittels des Farbwahl-Bedienelements 106b ist eine Leuchtfarbe der Beleuchtungseinrichtung 16 einstellbar. Mittels des Helligkeits-Bedienelements 106c ist eine Leuchtstärke der Beleuchtungseinrichtung 16 einstellbar.

Bevorzugt sind alle Bedienelemente Taster. Es ist jedoch auch jede andere, zweckmäßig als Bedienelement geeignete Art denkbar, z. B. Schalter, Drehknöpfe, Regler etc.

Darüber hinaus ist es bevorzugt denkbar, dass die Steuereinrichtung bestimmte Beleuchtungseinstellungen nur für bestimmte Betriebszustände des Kraftfahrzeugs 100 freigibt.

Dazu ist die Steuereinrichtung 104 ausgebildet, die Beleuchtungseinrichtung 16 in Abhängigkeit eines Betriebszustands des Kraftfahrzeugs 100 (z. B. automatisch) wahlweise in einem Normalbeleuchtungsmodus und/oder einem Dimmbeleuchtungsmodus zu betreiben, wobei in dem Normalbeleuchtungsmodus alle der mehreren Beleuchtungseinstellungen einstellbar sind und in dem Dimmbeleuchtungsmodus nur eine Teilmenge der mehreren Beleuchtungseinstellungen einstellbar sind.

Im Dimmbeleuchtungsmodus sind also weniger Beleuchtungseinstellungen verfügbar als im Normalbeleuchtungsmodus. Die Teilmenge der mehreren Beleuchtungseinstellungen kann z. B. nur aus einem Teil der Leuchtfarben bestehen. Denkbar ist z. B. auch, dass in dem Normalbeleuchtungsmodus alle der mehreren Stufen der jeweiligen Beleuchtungseinstellung einstellbar ist und/oder in dem Dimmbeleuchtungsmodus nur eine Teilmenge der mehreren Stufen einstellbar ist.

In dem gezeigten Ausführungsbeispiel ist die Steuereinrichtung 104 hier exemplarisch ausgebildet sein, bei Vorliegen eines Parkzustands des Kraftfahrzeugs 100, die Beleuchtungseinrichtung 16 in dem Normalbeleuchtungsmodus zu betreiben und/oder bei Vorliegen eines Fahrbetriebsmodus, die Beleuchtungseinrichtung 16 in dem Dimmbeleuchtungsmodus zu betreiben.

Beispielsweise ist die Steuereinrichtung 104 ausgebildet, einen Schaltzustand (z. B. ein Schaltzustandssignal) einer Zündung und/oder einer Parkbremse des Kraftfahrzeugs 100 zu erfassen oder zu empfangen. Der Parkzustand gibt bevorzugt eine deaktivierte Zündung und/oder eine eingelegte Parkbremse an. Der Fahrbetriebsmodus gibt bevorzugt eine aktivierte Zündung und/oder eine gelöste Parkbremse an.

Die Erfindung ist nicht auf die oben beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 12: Instrumententafel
- 14: Handschuhfach
- 16: Beleuchtungseinrichtung
- 18a-c: Lichtleisten
- 20a-c: Lichtaustrittsflächen
- 22: Trägerelement
- 26: Außenoberfläche der Instrumententafel
- 28: türseitiger Endbereich
- 30: mittelkonsolenseitiger Zentralbereich
- 32: Dashboard-Leiste
- 32a: Unterkante der Dashboard-Leiste
- 34: beifahrerseitiger Abschnitt der Instrumententafel
- 36: weiteres Ablagefach
- 100: Kraftfahrzeug
- 102: Bedieneinrichtung
- 104: Steuereinrichtung
- 106a-c: Bedienelemente
- 108a-e: weitere Beleuchtungseinrichtungen
- H: Kraftfahrzeug-Hochrichtung
- R: Haupterstreckungsrichtung
- X: Kraftfahrzeug-Längsrichtung,
- Y: Kraftfahrzeug-Querrichtung Y

## Patentansprüche

1. Kraftfahrzeug (100), vorzugsweise Nutzfahrzeug, aufweisend
eine Instrumententafel (12),
ein Ablagefach, vorzugsweise ein Handschuhfach (14), das an der Instrumententafel (12) angeordnet ist; und
eine Beleuchtungseinrichtung (16), die mindestens eine Lichtleiste (18a-c), vorzugsweise mindestens eine LED-Leiste oder mindestens einen Lichtleiter, umfasst, wobei die Beleuchtungseinrichtung (16) an der Instrumententafel (12) und zumindest abschnittsweise oberhalb des Ablagefachs angeordnet ist.

2. Kraftfahrzeug (100) nach Anspruch 1, wobei die Beleuchtungseinrichtung (16) mindestens eine Lichtaustrittsfläche (20a-c) aufweist, die ausgebildet ist, von der mindestens einen Lichtleiste (18a-c) durch die mindestens einen Lichtaustrittsfläche (20a-c) tretendes Licht diffus zu streuen.

3. Kraftfahrzeug (100) nach Anspruch 2, wobei die mindestens eine Lichtaustrittsfläche (20a-c) zum Streuen des durch die Lichtaustrittsfläche (20a-c) tretenden Lichts eine Vorsatzoptik umfasst.

4. Kraftfahrzeug (100) nach einem der Ansprüche 2 oder 3, wobei die mindestens eine Lichtaustrittsfläche (20a-c) zum Streuen des durch die mindestens eine Lichtaustrittsfläche (20a-c) tretenden Lichts ein das durchtretende Licht diffus streuendes Material, vorzugsweise ein LD12-Material, umfasst, wobei vorzugsweise die mindestens eine Lichtaustrittsfläche (20a-c) eine Mantelfläche eines Lichtleiters ist.

5. Kraftfahrzeug (100) nach einem der vorhergehenden Ansprüche, wobei die Beleuchtungseinrichtung (16) ein Trägerelement (22) umfasst, in das die mindestens eine Lichtleiste (18a-c) integriert ist.

6. Kraftfahrzeug (100) nach Anspruch 5, wobei das Trägerelement (22) an die Instrumententafel (12) angebracht, vorzugsweise verklebt und/oder verschraubt und/oder geclipst und/oder geschweißt, ist.

7. Kraftfahrzeug (100) nach einem der vorhergehenden Ansprüche, wobei eine einem Fahrzeuginnenraum zugewandte Außenoberfläche der Beleuchtungseinrichtung (16) bündig und/oder stufenfrei mit einer Instrumententafel-Außenoberfläche (26), vorzugsweise mit einer Außenfläche einer Dashboard-Leiste (32) der Instrumententafel (12), abschließt.

8. Kraftfahrzeug (100) nach einem der vorhergehenden Ansprüche, wobei die mindestens eine Lichtleiste (18a-c) mehrere, vorzugsweise drei, entlang einer Linie hintereinander angeordnete Lichtleisten (18a-c) umfasst.

9. Kraftfahrzeug (100) nach einem der vorhergehenden Ansprüche, wobei die mindestens eine Lichtleiste (18a-c) sich von einem türseitigen Endbereich (28) der Instrumententafel (12) bis in einen mittelkonsolenseitigen Zentralbereich (30) der Instrumententafel (12) erstreckt.

10. Kraftfahrzeug (100) nach einem der vorhergehenden Ansprüche, wobei die mindestens eine Lichtleiste (18a-c), vorzugsweise die mehreren Lichtleisten (18a-c), eine Gesamtlänge aufweist, die mindestens 30%, mindestens 40%, mindestens 50%, mindestens 60%, mindestens 70%, mindestens 80% oder mindestens 90% eines beifahrerseitigen Abschnitts (34) der Instrumententafel (12) entspricht.

11. Kraftfahrzeug (100) nach einem der vorhergehenden Ansprüche, wobei die Instrumententafel (12) eine Dashboard-Leiste (32) aufweist und die Beleuchtungseinrichtung (16) in die Dashboard-Leiste (32) integriert ist, vorzugsweise in Nuten der Dashboard-Leiste aufgenommen ist.

12. Kraftfahrzeug (100) nach Anspruch 11, wobei sich die mindestens eine Lichtleiste (18a-c) entlang einer Haupterstreckungsrichtung (R) der Dashboard-Leiste (32) und/oder entlang einer Unterkante (32a) der Dashboard-Leiste (32) erstreckt.

13. Kraftfahrzeug (100) nach einem der vorhergehenden Ansprüche, wobei die Beleuchtungseinrichtung (16) nicht von einer einem Fahrzeuginnenraum zugewandten Instrumententafel-Außenoberfläche (26) abkragt.

14. Kraftfahrzeug (100) nach einem der vorhergehenden Ansprüche, wobei
die mindestens eine Lichtleiste (18a-c) hinter der mindestens einen Lichtaustrittsfläche (20a-c) angeordnet ist; und/oder
die mindestens eine Lichtleiste (18a-c) an einem beifahrerseitigen Abschnitt (34) der Instrumententafel (12) angeordnet ist; und/oder
die mindestens eine Lichtleiste (18a-c) abschnittsweise oberhalb des Ablagefachs und abschnittsweise oberhalb eines, vorzugsweise offenen, Ablagefachs (36) der Instrumententafel (12) angeordnet ist; und/oder
die mindestens eine Lichtaustrittsfläche (20a-c) als Diffusor wirkt; und/oder
die Instrumententafel (12), vorzugsweise die Dashboard-Leiste (32), eine strukturierte Oberfläche aufweist, um das von der Beleuchtungseinrichtung ausgestrahlte Licht diffus zu brechen; und/oder
die Beleuchtungseinrichtung (16) in die Instrumententafel (12) integriert ist.

15. Kraftfahrzeug (100) nach einem der vorhergehenden Ansprüche, aufweisend
eine Bedieneinrichtung (102), mittels der eine Nutzereingabe erfassbar ist; und
eine Steuereinrichtung (104), die eingerichtet ist, in Abhängigkeit der auf der Bedieneinrichtung (102) erfassten Nutzereingabe mehrere Beleuchtungseinstellungen der Beleuchtungseinrichtung (16), vorzugsweise eine Helligkeit und/oder eine Leuchtfarbe und/oder eine Leuchtstärke eines von der Beleuchtungseinrichtung (16) emittierten Lichts, einzustellen.

16. Kraftfahrzeug (100) nach Anspruch 15, wobei die Steuereinrichtung (104) ausgebildet ist, die Beleuchtungseinrichtung (16) in Abhängigkeit eines Betriebszustands des Kraftfahrzeugs (100) wahlweise in einem Normalbeleuchtungsmodus und einem Dimmbeleuchtungsmodus zu betreiben, wobei in dem Normalbeleuchtungsmodus alle der mehreren Beleuchtungseinstellungen einstellbar sind und in dem Dimmbeleuchtungsmodus nur eine Teilmenge der mehreren Beleuchtungseinstellungen einstellbar sind.

17. Kraftfahrzeug (100) nach Anspruch 16, wobei die Steuereinrichtung (104) ausgebildet ist, bei Vorliegen eines Parkzustands des Kraftfahrzeugs (100), die Beleuchtungseinrichtung (16) in dem Normalbeleuchtungsmodus zu betreiben und/oder bei Vorliegen eines Fahrbetriebsmodus, die Beleuchtungseinrichtung (16) in dem Dimmbeleuchtungsmodus zu betreiben.

18. Kraftfahrzeug (100) nach einem der Ansprüche 15 bis 17, wobei die Bedieneinrichtung (102), vorzugsweise ausschließlich, folgende Bedienelemente (106a-c), vorzugsweise Taster, zur Einstellung der Teilmenge der mehreren Beleuchtungseinstellungen aufweist:
ein An/Aus-Bedienelement (106a), mittels dessen die eine Beleuchtungseinrichtung (16) einschaltbar und ausschaltbar ist; und/oder
ein Farbwahl-Bedienelement (106b), mittels dessen eine Leuchtfarbe der Beleuchtungseinrichtung (16) einstellbar ist; und/oder
ein Helligkeits-Bedienelement (106c), mittels dessen eine Leuchtstärke der Beleuchtungseinrichtung (16) einstellbar ist.
